# EUROPEAN PATENT SPECIFICATION

(11) **EP 1 131 923 B1**
(45) Date of publication and mention of the grant of the patent: **21.03.2007**
(21) Application number: 99931960.1
(22) Date of filing: 25.06.1999
(51) Int. Cl.: H04L 12/56, H04Q 11/04, H04L 29/06

(54) **MULTI-PROTOCOL CONVERSION ASSISTANCE METHOD AND SYSTEM FOR A NETWORK ACCELERATOR**
VERFAHREN UND SYSTEM ZUR MULTIPROTOKOLL-KONVERSIONSHILFE FÜR EINEN NETZBESCHLEUNIGER
SYSTEME ET PROCEDE D'ASSISTANCE A LA CONVERSION MULTI-PROTOCOLE POUR ACCELERATEUR DE RESEAU

(30) Priority: 27.06.1998 US 90939 P; 16.03.1999 US 271061
(43) Date of publication of application: 12.09.2001
(73) Proprietor: Level One Communications, Inc., Freemont, CA 94538 (US)
(72) Inventor: CHONG, Simon, Fremont, CA 94539 (US); HUANG, Anguo, Tony, Mountain View, CA 94040 (US); BLESZYNSKI, Ryszard, Cupertino, CA 95019 (US); STELLIGA, David, A., Pleasanton, CA 94588 (US)
(74) Representative: Molyneaux, Martyn William
(86) International application number: PCT/US1999/014527
(87) International publication number: WO 2000/001122

(56) References cited:
- WO-A-98/13764
- US-A- 5 524 116
- US-A- 5 664 116
- US-A- 5 751 955
- US-A- 5 796 715
- US-A- 5 825 765
- US-A- 5 912 892
- NEWMAN P ET AL: "Flow labelled IP: a connectionless approach to ATM" PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996, PROCEEDINGS OF INFOCOM, L, vol. VOL. 2 CONF. 15, 24 March 1996 (1996-03-24), pages 1251-1260, XP010158197 ISBN: 0-8186-7293-5
- LE FAUCHEUR F: "IETF Multiprotocol Label Switching (MPLS) Architecture" IEEE INTERNATIONAL CONFERENCE ON ATM, XX, XX, 22 June 1998 (1998-06-22), pages 6-15, XP002115225

## Description

### BACKGROUND OF THE INVENTION

The present invention relates in general to protocol conversion and tagging in networking systems and more particularly to techniques for converting multiple protocol types in a network accelerator to accommodate high bandwidth demand in an Asynchronous Transfer Mode (ATM) networking system.

The need for faster communication among computers and other systems requires ever faster and more efficient networks. Today, networks typically use an amalgam of various software and hardware to implement a variety of network functions and standards. Network devices such as client computer systems, servers, hubs, routers, switches, network backbones, etc., are each complex devices that require digital processing in hardware and software to facilitate network communication. Some tasks performed in a network device include translation between different network standards such as Ethernet and ATM, reformatting data, traffic scheduling, routing data cells, packets messages, etc. Depending on the particular protocol being implemented, some tasks may be performed at different points in the network.

In conventional networking systems that implement ATM, data traffic is handled by a Virtual Channel, or Virtual Connection (VC). There are typically many VCs in each system and each VC has its own characteristics, such as packet type, packet size and protocols. For each VC, a descriptor which identifies the particular VC and its characteristics and requirements is stored in a memory. When a scheduler determines that a particular VC is ready for transmission, the VC descriptor is accessed and processed to determine the appropriate characteristics and requirements for cell transmission on the particular connection.

In a typical network system, many different packets formatted according to different protocols are transported across the many various networking system devices using many VCs. When a packet is received over the network by a networking device, it is desirable to store the packet in a buffer for further processing of the information in the packet. For example, it is desirable to read information in a packet header and to add information to a packet header. Depending on the protocol used, the packet header size will vary accordingly. Adding information to a packet header is generally a slow process, limited by the time it takes to rebuild the packet and store it in a new buffer. Such rebuilding is usually done by software resident on a host CPU and can take many clock cycles to complete. It is therefore desirable to provide a networking device with the capability of adding information to a packet header without rebuilding the packet. It is also desirable to provide a generic packet header for all protocol types to improve processing efficiency.

Newman P., et. al., "Flow Labelled IP: A Connectionless Approach to ATM," Proceedings of Infocom, L. vol. 2, conf. 15, 24 March 1996, p. 1251-1260, discloses integrating ATM hardware directly with IP and preserving the connection nature of IP. In Newman, "soft" state is used in the ATM hardware to cache the IP forwarding decision to enable further traffic on the same IP flow to be switched by the ATM hardware rather than forwarded by IP software.

Le Faucheur, F., "IETF Multiprotocol Label Switching (MPLS) Architecture," IEEE International Conference on ATM, 22 June 1998, p. 6-15, discloses the concepts of Multiprotocol Label Switching (MPLS) technology under standardization by the Internet Engineering Task Force (IETF) at the time of Le Faucheur publication. In Le Faucheur, MPLS is used for transporting any level 3 protocol over any level 2 technology so that one of its applications is integrated transport of IP over ATM.

### SUMMARY OF THE INVENTION

According to a first aspect of the invention, there is provided a receiving device as claimed in claim 1.

According to a second aspect of the invention, there is provided a transmitting device as claimed in claim 5.

According to a third aspect of the invention, there is provided a device including a receive processing engine and a transmit processing engine as claimed in claim 14.

According to a fourth aspect of the invention, there is provided a method of processing a packet in an Asynchronous Transfer Mode networking system, as claimed in claim 15.

The present invention provides novel techniques for accommodating multiple protocol encapsulation formats in a networking system. In particular, the techniques of the present invention provide systems and methods for adding information to a packet header without rebuilding and storing the packet in a second buffer location so as to assist in converting multiple protocol types.

Systems and methods for assisting multiple protocol conversion in a network accelerator are described. According to an embodiment of the invention, a network device includes a transmit processing engine, a receive processing engine and one or more memories, each memory including one or more buffers for storing packets. When packets are received, the receive engine is able to add a 4, 8, 12 or 16-byte tag to the front of each packet on a per-VC basis and store the packets in buffers. Additionally, the receive engine is able to add an offset to the starting address of each packet in the buffer in which it is stored relative to the beginning of that buffer. When a packet is to be transmitted, the transmit engine is able to transmit the packet from an address that is offset from the starting address of the packet buffer by one or more bytes. Additionally, the transmit engine is able to add one of several predefined packet headers on a per-packet basis. In one embodiment, all components of the network device are implemented on a single semiconductor chip.

According to an embodiment of the invention, a networking system device coupled to one or more networks is provided. The device typically comprises a memory including one or more buffers, each buffer for storing a packet, and a receive processing engine coupled to the memory. When a packet for a first one of a plurality of virtual channels (VCs) is received, the receive engine adds a per-VC tag to the beginning of the packet, wherein the tag is associated with the first VC, and wherein the receive engine stores the packet to a first one of the buffers.

According to another embodiment of the invention, a networking system device coupled to one or more networks is provided. The device typically comprises a memory including one or more buffers, wherein a first packet for a first one of a plurality of VCs is stored in a first one of the buffers. The device also typically includes a transmit processing engine coupled to the memory, wherein when the first packet is ready to be transmitted, the transmit engine starts transmission of the first packet beginning at an offset address relative to the beginning of the first buffer.

According to yet another embodiment of the present invention, a networking system device coupled to one or more networks is provided. The device typically comprises a memory including one or more buffers, each buffer for storing a packet, and a receive processing engine coupled to the memory. When a first packet for a first one of a plurality of VCs is received, the receive engine adds a per-VC tag to the beginning of the packet, the tag being associated with the first VC, and wherein the receive engine stores the packet to a first one of the buffers. The device also typically includes a transmit processing engine coupled to the memory, wherein when the first packet is ready to be transmitted, the transmit engine starts transmission of the first packet beginning at a first offset address relative to the beginning of the first buffer.

According to an additional embodiment of the invention, a method of processing a packet for transmission in a networking system device is provided, wherein the device is coupled to one or more networks, the device including a memory having one or more buffers, wherein the memory is coupled to a transmit processing engine and a receive processing engine. The method typically comprises the steps of receiving the packet on a first one of a plurality of virtual channels (VCs) by the receive engine, adding a tag to the beginning of the packet, the tag associated with the first VC, and storing the packet to a first one of the buffers. The method also typically includes the step of, when the first packet is ready to be transmitted, starting transmission of the packet beginning at a first offset address relative to the beginning of the first buffer by the transmit engine.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings. In the drawings, like reference numbers indicate identical or functionally similar elements.

### BRIEF DESCRIPTION OF THE DRAWINGS

Figure 1 is a block diagram of the architecture of a network processing engine according to the present invention;
Figure 2 illustrates examples of the data processing capabilities of network processing engine 10 according to the present invention;
Figure 3 illustrates examples of packet encapsulation formats supported by engine 10 according to the present invention;
Figure 4 summarizes examples of offset values and fields included in the generic header according to the present invention; and
Figure 5 illustrates an example of internal LLC/SNAP values used by engine 10 according to an embodiment of the present invention.

### DESCRIPTION OF THE SPECIFIC EMBODIMENTS

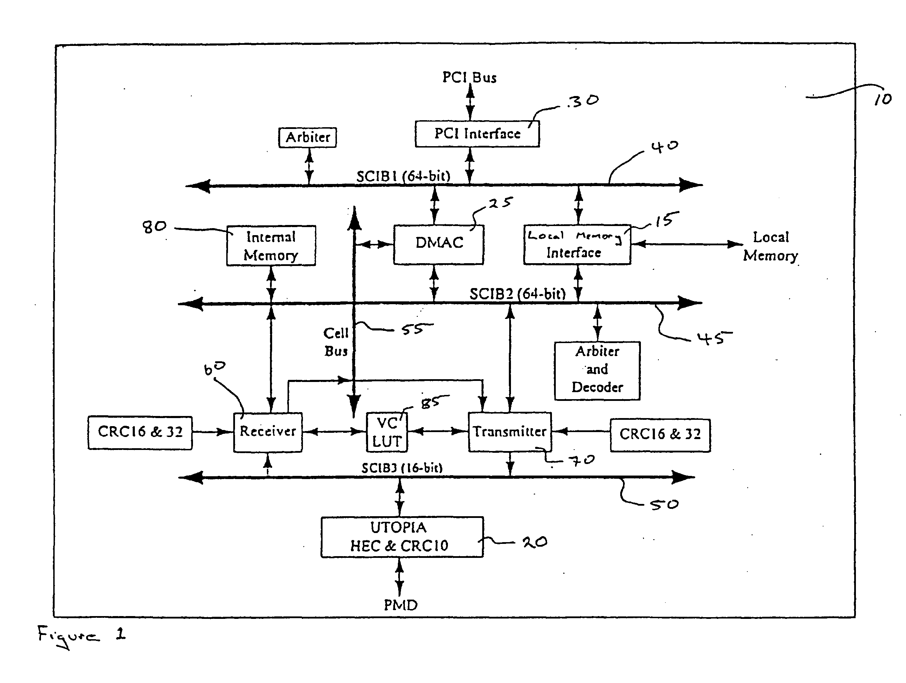

Figure 1 is a block diagram of the architecture of a network processing engine 10 according to the present invention. In preferred aspects, the network processing engine of the present invention is useful for a variety of network communications applications including implementation in multi-protocol network interface cards (NICs), server NICs, workgroup, IP and ATM switches, multi-protocol and IP routers, ATM backbone switch applications, multi-protocol and multi-protocol /ATM adapters and the like. In preferred aspects, all components of processing engine 10 reside on a single chip (e.g., a single silicon chip), but all components may be spread across many chips such that processing engine 10 is implemented using many chips.

Processing engine 10 includes a local memory interface block 15, UTOPIA interface 20, Direct Memory Access Controller (DMAC) 25, PCI interface 30, first internal bus 40, second internal bus 45, third internal bus 50, and cell bus 55. Processing engine 10 also includes an internal memory 80 and a receiver block 60 and a transmitter block 70 for processing incoming and outgoing data transmissions, respectively, over a communications interface, such as UTOPIA interface 20. Local memory interface block 15 provides a connection to a local, off-chip system memory, such as DRAM, SRAM, SDRAM, SSRAM or any combination thereof. DMAC 25 provides control of data transfers between external memories (PCI), internal memory 80 and the local memory. Internal memory 80 is used in one embodiment to store VC descriptors on-chip for fast access of the VC descriptors. Additionally, in one embodiment, internal memory 80 stores allowed cell rate (ACR) and minimum cell rate (MCR) bitmaps to provide enhanced ABR traffic scheduling capabilities.

PCI interface 30 provides a connection to external intelligence, such as a host computer system, and external packet memories. First and second internal buses 40 and 45 in one embodiment are non-multiplexed 32 bit address and 64 bit data buses. Depending on the desired line rate, PCI interface 30 is configured to run at frequencies up to 33 MHz over a 32 bit PCI bus, or at frequencies up to 66 MHz over a 64 bit PCI bus. For example, to achieve a 622 Mbps line rate, a 64 bit interface is used with frequencies up to 66 MHz. UTOPIA interface 20 supports connections to a broad range of layer 1 physical interfaces, including, for example, OC-1, OC-3, OC-12, OC-48, OC-192 and DS-3 interfaces and the like. To support a 622 Mbps line rate, the UTOPIA data bus is 16 bits, whereas for a 155 Mbps line rate the UTOPIA bus is 8 bits. Third internal data bus 50 is an 8 or 16 bit UTOPIA compatible interface. Cell bus 55 is a 64 bit data path and is used to transfer cells or frames between internal cell/frame buffers of receiver block 60 and transmitter block 70 and the PCI memory space through DMAC 25. Cell bus 55 allows several transactions to occur in parallel. For example, data payload transfers and descriptor data movement may occur simultaneously. Additionally, for a 622 Mbps line rate, cell bus 55 is capable of off-loading up to 160 MBps of bandwidth from local memory.

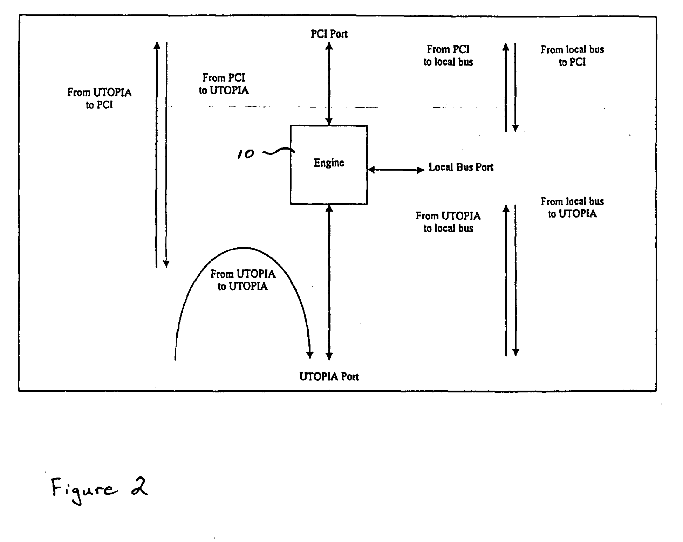

Figure 2 illustrates examples of the data processing capabilities of network processing engine 10. The exemplary data processing capabilities shown can be generally classified into four areas: receive data (from the UTOPIA port via UTOPIA interface 20), transmit data (to the UTOPIA port), DMA data transfer (between the PCI bus via PCI interface 30 and a local bus such as first internal bus 40), and UTOPIA loop-back (from the UTOPIA port back to the UTOPIA port). Referring to Figure 2, engine 10 transparently transfers packets from the PCI bus to a local bus and vice versa via direct memory access (DMA). Additionally, engine 10 transfers receive UTOPIA data back to the transmit UTOPIA port on a per VC basis.

Incoming, or receive, data from UTOPIA port to either the local bus or the PCI bus is checked for the proper AAL or OAM protocol, and optionally policed for traffic shape conformance. For AAL5, the processing typically includes length and CRC-32 verification. For OAM cells, the CRC-10 is checked. Additionally, according to an embodiment of the invention, engine 10 has the ability to add a 4, 8, 12 or 16-byte tag to the front of each packet on a per-VC basis when storing the packet to a buffer as will be discussed in more detail below.

Engine 10 performs three major operations on the outgoing data (from the PCI or a local bus to the UTOPIA port) according to a preferred embodiment of the present invention. First, engine 10 provides for an offset starting address which allows packet transmission to begin from any one of multiple bytes of the packet buffer on a per-packet basis. In preferred aspects, the offset starting address indicates any of the first 63 bytes of the packet buffer. This offset option combined with an ability to place a packet starting anywhere within the first 63 bytes of the buffer implements a generic header capability. In preferred aspects, up to 63 bytes are added or removed from the front of the packet on a per-packet basis. Second, engine 10 optionally adds one of several predefined packet headers on a per-packet basis. Third, engine 10 adds the AAL and/or OAM overhead to the packet.

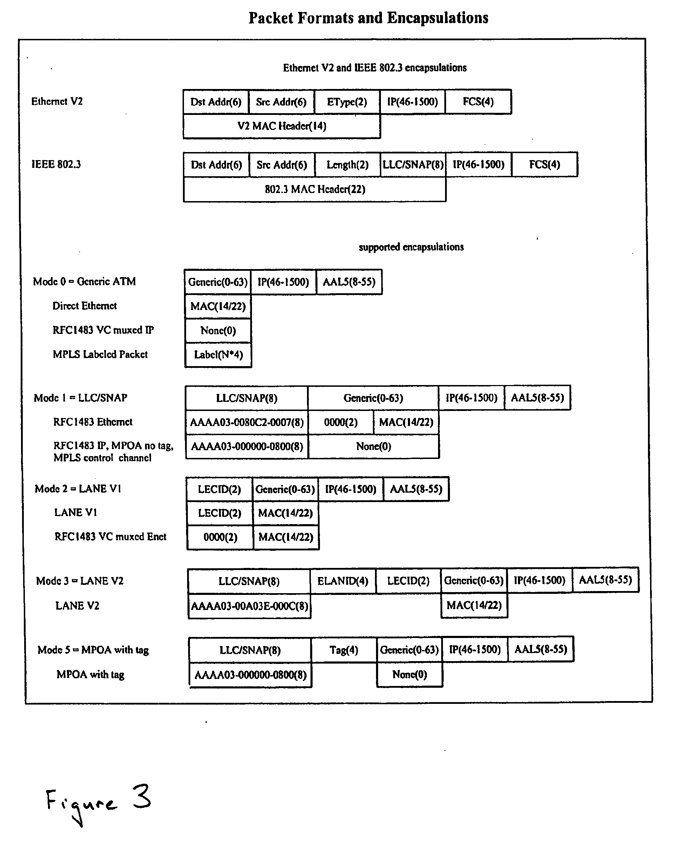

According to one embodiment, engine 10 supports a wide range of packet encapsulations. An example of packet encapsulation formats supported by engine 10 are shown in Figure 3. While the examples all show IP data as the payload, engine 10 supports any routing protocol suite since the payload content is transparent to engine 10.

The packet encapsulation techniques provided by engine 10 are used to process a wide variety of packet formats. According to one embodiment, engine 10 adds or removes a generic packet header on a per-packet basis, and adds several fixed packet headers on a per-packet basis. According to a preferred embodiment of the generic header processing capability, when a packet is received from the UTOPIA port, engine 10 adds a 4, 8, 12 or 16 byte per VC tag to the front of the packet when storing the packet to a buffer. In one embodiment, packets are stored in buffers in PCI memory space, but may also be stored in local memory or internal memory 80. According to one embodiment, there is also selection of an offset for storing the packet, including the added per-VC tag, at an offset starting address so as to allow flexibility in manipulating and adding information to the header. In preferred aspects, the packet is stored at an offset of 0, 16, 32, or 48 bytes in the buffer. When a packet is prepared for transmission to the UTOPIA port, e.g., in response to an Add_Packet command received by transmit engine 70 from external intelligence, the transmission is started from a buffer address based on an offset field in the Add_Packet command, which specifies the number of bytes from the beginning of the buffer that are not to be included as part of the packet. In preferred aspects, the offset field is a 6-bit field, which allows for up to a 63 byte offset. For example, a value of 0 indicates all the bytes from the beginning of the buffer are to be included, a value of 1 indicates the first byte is not to be included, a value of 2 indicates the first two bytes are not to be included, and so on.

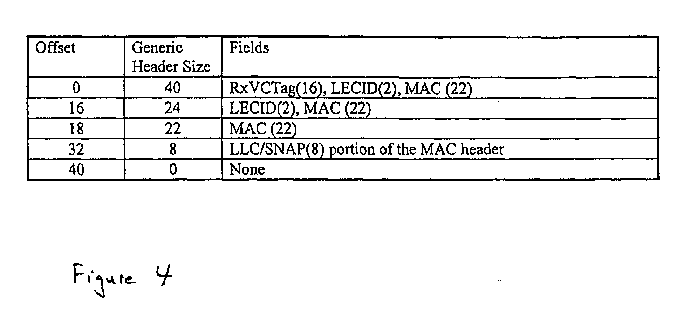

If, for example, a LANE V1 IEEE 802.3 (see Figure 3 for the packet format) packet is received on a VC that is configured for an added 16-byte tag in front of the packet, then by setting the Add_Packet offset to various values, differing set of fields in the generic header are possible. A list of examples of possible offset values and fields included in the generic header for this example is shown in Figure 4.

In addition to the generic format, in one embodiment, the Add_Packet command includes a mode field that allows additional encapsulations to be placed in front of the packet. Although all of the mode-specific formats could be accommodated under the generic header encapsulation, one reason for using the other modes is to reduce the packet processing overhead in both the external intelligence and engine 10. Examples of such encapsulations are shown in Figure 3. As shown, mode 0 adds no additional packet encapsulations, mode 1 adds an 8-byte encapsulation usually used for LLC/SNAP headers, mode 2 adds a 2-byte encapsulation usually used for the LANE V1 LECID, mode 3 adds an 8-byte encapsulation usually used for LLC/SNAP headers, a 4-byte encapsulation usually used the LANE V2 ELANID, and a 2-byte encapsulation usually used for the LANE V2 LECID, and mode 5 adds an 8-byte encapsulation usually used for LLC/SNAP headers and a 4-byte encapsulation usually used for MPOA tags. All of these additional headers are specified directly in the Add-Packet command with the exception of the 8-byte LLC/SNAP encapsulation. To speed up processing of this header, engine 10 preferably maintains internal LLC/SNAP encapsulation values, but it may maintain fewer or more values. In one embodiment, instead of explicitly indicating these values through the Add-Packet command, the packet source specifies a pointer indicating which of the internal LLC/SNAP values needs to be used.

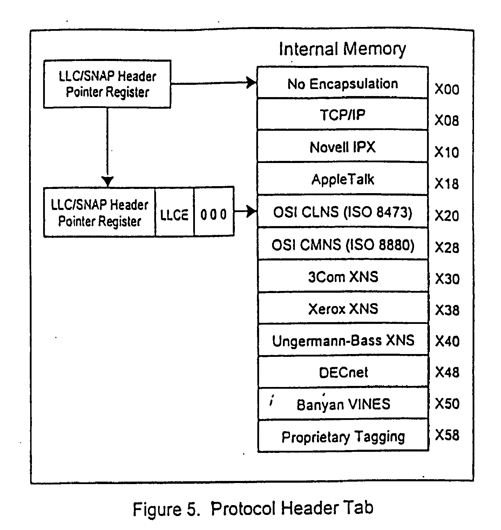

Figure 5 illustrates an example of internal LLC/SNAP values used by engine 10 according to an embodiment of the present invention. In one embodiment, the LLCE (LLC Encapsulation) field is used as an index to a Protocol Header Table to attach the appropriate LLC/SNAP encapsulation. If the value of the LLCE field is 0, the packet is transmitted without LLC/SNAP encapsulation.

The first two formats shown in Figure 3 describe two Ethernet formats in use today. In general, the main difference between Ethernet V2 and IEEE 802.3 are the Etype/Length and LLC/SNAP fields. If the Etype/Length field is greater than 1536 (0600ₕ) then the packet is an Ethernet V2 packet, otherwise the packet is an IEEE 802.3 packet. The IEEE 802.3 packet also has an LLC/SNAP field, which helps identify the payload type being carried.

The remaining formats shown in Figure 3 include additional encapsulation modes and provide a detailed description of the LLC/SNAP (specified in hexadecimal) and generic headers for some of the more common IP over ATM formats. All bit values are specified in hexadecimal and the length of each field is included in parenthesis and is specified in decimal. As shown, mode 0, with the generic header containing the MAC header, is the direct mapping of Ethernet packets into an ATM payload. This mapping is not specified in any of the standards. Mode 0, with no generic header, is the mapping for VC-based multiplexing of routed protocols according to RFC1483. Mode 0 can also be used for MPLS by adding the multiple 4-byte labels to the front of a packet. Mode 1 is used for the RFC 1483 bridged Ethernet packets without FCS, or MPOA without tags. Mode 2 is used for LANE V1 or RFC1483 VC muxed Ethernet. Mode 3 is used for LANE V2. Finally, mode 5 is used for MPOA with tags.

## Claims

1. A receiving device for an Asynchronous Transfer Mode networking system comprising:
a memory (15,80) including one or more buffers;
a receive processing engine (60) coupled to the memory, **characterized in that**: the receive processing engine is arranged: to store, when a packet for a first one of a plurality of virtual channels (VCs) is received, the packet in a first of the buffers at an offset address relative to a beginning of the first buffer; to add a per virtual channel tag to the packet, said tag associated with the first virtual channel; and to store the per-virtual channel tag in the first buffer between the beginning and the offset address.

2. The device of claim 1, wherein the tag is one of a 4, 8, 12, and 16 byte tag, depending on the virtual channel.

3. The device of claim 1, wherein the offset address is one of 16, 32 and 48 bytes relative to the beginning of the first buffer.

4. The device of claim 1, wherein an external processor instructs the receive processing engine to store the packet in the first buffer at the offset address.

5. A transmitting device for an Asynchronous Transfer Mode networking system comprising:
a memory (15, 80) including one or more buffers, arranged to store in a first one of the buffers a packet for a first one of a plurality of virtual channels, wherein the packet includes a received portion for storing in the first buffer at a first offset address relative to a beginning of the first buffer and includes a per-virtual channel tag associated with the first virtual channel, the per-virtual channel tag being for storing in the first buffer between the beginning and the first offset address; and
a transmit processing engine (70) coupled to the memory, the transmit processing engine being arranged to start, when the packet is ready to be transmitted, transmission of the packet beginning at a second offset address relative to the beginning of the first buffer.

6. The device of claim 5, wherein the first offset address and the second offset address are equivalent.

7. The device of claim 6, wherein the transmit processing engine receives an add packet command indicating that the packet is ready for transmission, wherein the add packet command includes an offset field that indicates where the second offset address begins relative to the beginning of the first buffer.

8. The device of claim 7, wherein the offset field is a 6-bit field.

9. The device of claim 7, wherein the add packet command further includes a mode field for specifying a packet encapsulation to be added to the beginning of the packet, wherein the transmit processing engine adds the packet encapsulation specified prior to transmission.

10. The device of claim 9, wherein the mode field specifies that no encapsulation is to be added.

11. The device of claim 9, wherein the packet encapsulation specified by the mode field includes an LLC/SNAP header.

12. The device of claim 11, wherein the mode field further specifies adding one of a LANE header and an MPOA tag.

13. The device of claim 11 further including an LLC/SNAP encapsulation table identifying a plurality of LLC/SNAP encapsulation values, wherein the add packet command further includes a LLCE field which points to a specific one of the LLC/SNAP encapsulation values, wherein the specific value is added to the packet.

14. A device for an Asynchronous Transfer Mode networking system comprising:
a memory (15, 80) including one or more buffers;
a receive processing engine (60) coupled to the memory, the receive processing engine arranged: to receive a packet for a first one of a plurality of virtual channels and store the packet in a first of the buffers at a first offset address relative to the beginning of the first buffer; to add a per virtual channel tag to the packet**,** said tag associated with the first virtual channel; and to store the virtual-channel tag in the first buffer between the beginning and the first offset address; and
a transmit processing engine (70) coupled to the memory, the transmit processing engine being arranged to start, when the first packet is ready to be transmitted, transmission of the packet beginning at a second offset address relative to the beginning of the first buffer.

15. A method of processing a packet in an Asynchronous Transfer Mode networking system comprising:
receiving a packet on a first one of a plurality of virtual channels;
adding a per-virtual channel tag to the packet, the per-virtual channel tag associated with the first virtual channel; **characterized by** the following steps:
storing the packet in a first of a number of buffers at a first offset address relative to a beginning of the first buffer;
storing the per-virtual channel tag in the first buffer between the beginning and the first offset address; and
when the packet is ready to be transmitted, starting transmission of the packet beginning at a second offset address relative to the beginning of the first buffer.

## Patentansprüche

1. Empfangsvorrichtung für ein Asynchrones Transfermodus-Netzwerksystem, wobei die Vorrichtung folgendes umfasst:
einen Speicher (15, 80) mit einem oder mehreren Puffern;
eine Empfangs-Processing-Engine (60), die mit dem Speicher gekoppelt ist, **dadurch gekennzeichnet, dass** die Empfangs-Processing-Engine so angeordnet ist, dass sie: wenn ein Paket für einen ersten einer Mehrzahl virtueller Kanäle (VCs) empfangen wird, das Paket in einem ersten der Puffer an einer Versatzadresse im Verhältnis zu dem Anfang des ersten Puffers speichert; dem Paket ein Tag je virtuellem Kanal hinzufügt, wobei das genannte Tag dem ersten virtuellen Kanal zugeordnet ist; und das Tag je virtuellem Kanal in dem ersten Puffer zwischen dem Anfang und der Versatzadresse speichert.

2. Vorrichtung nach Anspruch 1, wobei das Tag abhängig von dem virtuellen Kanal ein Tag mit 4, 8, 12 oder 16 Byte darstellt.

3. Vorrichtung nach Anspruch 1, wobei die Versatzadresse 16, 32 oder 48 Byte entspricht im Verhältnis zu dem Anfang des ersten Puffers.

4. Vorrichtung nach Anspruch 1, wobei ein externer Prozessor die Empfangs-Processing-Engine anweist, das Paket in dem ersten Puffer an der Versatzadresse zu speichern.

5. Sendevorrichtung für ein Asynchrones Transfermodus-Netzwerksystem, wobei die Vorrichtung folgendes umfasst:
einen Speicher (15, 80) mit einem oder mehreren Puffern, der so angeordnet ist, dass in einem ersten der Puffer ein Paket für einen ersten einer Mehrzahl von virtuellen Kanälen gespeichert wird, wobei das Paket einen empfangenen Abschnitt zum Speichern in dem ersten Puffer an einer ersten Versatzadresse im Verhältnis zu einem Anfang des ersten Puffers aufweist sowie ein Tag je virtuellem Kanal, das dem ersten virtuellen Kanal zugeordnet ist, wobei das Tag je virtuellem Kanal zum Speichern in dem ersten Puffer zwischen dem Anfang und der ersten Versatzadresse dient; und
eine Sende-Processing-Engine (70), die mit dem Speicher gekoppelt ist, wobei die Sende-Processing-Engine so angeordnet ist, dass sie wenn das Paket für die Übermittlung bereit ist, mit der Übermittlung des Pakets beginnend an einer zweiten Versatzadresse im Verhältnis zu dem Beginn des ersten Puffers beginnt.

6. Vorrichtung nach Anspruch 5, wobei die erste Versatzadresse und die zweite Versatzadresse äquivalent sind.

7. Vorrichtung nach Anspruch 6, wobei die Sende-Processing-Engine einen Pakethinzufügungsbefehl empfängt, der anzeigt, dass das Paket zur Übermittlung bereit ist, wobei der Pakethinzufügungsbefehl ein Versatzfeld aufweist, das anzeigt, wo die zweite Versatzadresse im Verhältnis zu dem Beginn des ersten Puffers beginnt.

8. Vorrichtung nach Anspruch 7, wobei es sich bei der Versatzadresse um ein 6-Bit-Feld handelt.

9. Vorrichtung nach Anspruch 7, wobei der Pakethinzufügungsbefehl ferner ein Modusfeld zur Spezifizierung einer Paketeinkapselung aufweist, das dem Anfang des Paket hinzugefügt wird, wobei die Sende-Processing-Engine die spezifizierte Paketeinkapselung vor der Übermittlung hinzufügt.

10. Vorrichtung nach Anspruch 9, wobei das Modusfeld spezifiziert, dass keine Einkapselung hinzugefügt werden soll.

11. Vorrichtung nach Anspruch 9, wobei die durch das Modusfeld spezifizierte Einkapselung einen LLC/SNAP-Header aufweist.

12. Vorrichtung nach Anspruch 11, wobei das Modusfeld ferner das Hinzufügen eines LANE-Headers und eines MPOA-Tags spezifiziert.

13. Vorrichtung nach Anspruch 11, wobei diese ferner eine LLC/SNAP-Einkapselungstabelle aufweist, die eine Mehrzahl von LLC/SNAP-Einkapselungswerten identifiziert, wobei der Pakethinzufügungsbefehl ferner ein LLCE-Feld aufweist, das auf einen speziellen der LLC/SNAP-Einkapselungswerte zeigt, wobei der spezielle Wert dem Paket hinzugefügt wird.

14. Vorrichtung für ein Asynchrones Transfermodus-Netzwerksystem, wobei die Vorrichtung folgendes umfasst:
einen Speicher (15, 80) mit einem oder mehreren Puffern;
eine Empfangs-Processing-Engine (60), die mit dem Speicher gekoppelt ist, wobei die Empfangs-Processing-Engine so angeordnet ist, dass sie: Paket für einen ersten einer Mehrzahl von virtuellen Kanälen empfängt und das Paket in einem ersten der Puffer an einer ersten Versatzadresse im Verhältnis zu dem Anfang des ersten Puffers speichert; dem Paket ein Tag je virtuellem Kanal hinzufügt, wobei das genannte Tag dem ersten virtuellen Kanal zugeordnet ist; und das Tag je virtuellem Kanal in dem ersten Puffer zwischen dem Anfang und der Versatzadresse speichert; und
eine Sende-Processing-Engine (70), die mit dem Speicher gekoppelt ist, wobei die Sende-Processing-Engine so angeordnet ist, dass sie wenn das Paket für die Übermittlung bereit ist, mit der Übermittlung des Pakets beginnend an einer zweiten Versatzadresse im Verhältnis zu dem Beginn des ersten Puffers beginnt.

15. Verfahren zur Verarbeitung eines Pakets in einem Asynchronen Transfermodus-Netzwerksystem, wobei das Verfahren folgendes umfasst:
das Empfangen eines Pakets an einem ersten einer Mehrzahl von virtuellen Kanälen;
das Hinzufügen eines Tags je virtuellem Kanal zu dem Paket, wobei das Tag je virtuellem Kanal dem ersten virtuellen Kanal zugeordnet ist; **gekennzeichnet durch** die folgenden Schritte:
das Speichern des Pakets in einem ersten einer Reihe von Puffern an einer ersten Versatzadresse im Verhältnis zu einem Anfang des ersten Puffers;
das Speichern des Tags je virtuellem Kanal in dem ersten Puffer zwischen dem Anfang und der ersten Versatzadresse; und
wenn das Paket für die Übermittlung bereit ist, das Beginnen der Übermittlung des Pakets beginnend an einer zweiten Versatzadresse im Verhältnis zu dem Anfang des ersten Puffers.

## Revendications

1. Dispositif récepteur pour un système de mise en réseau à mode de transfert asynchrone, comprenant :
une mémoire (15, 80) comprenant un ou plusieurs tampons;
un moteur de traitement de réception (60) couplé à la mémoire, **caractérisé en ce que** le moteur de traitement de réception est agencé : pour stocker, lorsqu'un paquet pour un premier d'une pluralité de canaux virtuels (en anglais « Virtual Channel » - VC) est reçu, le paquet dans un premier des tampons à une adresse de décalage par rapport à un début du premier tampon ; pour ajouter une étiquette par canal virtuel au paquet, ladite étiquette étant associée au premier canal virtuel ; et pour stocker l'étiquette par canal virtuel dans le premier tampon entre le début et l'adresse de décalage.

2. Dispositif selon la revendication 1, dans lequel l'étiquette est l'une d'une étiquette de 4, 8, 12 et 16 octets, en fonction du canal virtuel.

3. Dispositif selon la revendication 1, dans lequel l'adresse de décalage est l'un de 16, 32 ou 48 octets par rapport au début du premier tampon.

4. Dispositif selon la revendication 1, dans lequel un processeur externe demande au moteur de traitement de réception de stocker le paquet dans le premier tampon à l'adresse de décalage.

5. Dispositif émetteur pour un système de mise en réseau à mode de transfert asynchrone, comprenant :
une mémoire (15, 80) comprenant un ou plusieurs tampons, agencée pour stocker dans un premier des tampons un paquet pour un premier d'une pluralité de canaux virtuels, dans lequel le paquet comprend une partie reçue à stocker dans le premier tampon d'une première adresse de décalage par rapport à un début du premier tampon et comprend une étiquette par canal virtuel associée au premier canal virtuel, l'étiquette par canal virtuel étant à stocker dans le premier tampon entre le début et la première adresse de décalage ; et
moteur de traitement d'émission (70) couplé à la mémoire, le moteur de traitement d'émission étant agencé pour débuter, lorsque le paquet est prêt à être transmis, l'émission du paquet commençant à une seconde adresse de décalage par rapport au début du premier tampon.

6. Dispositif selon la revendication 5, dans lequel la première adresse de décalage et la seconde adresse de décalage sont équivalentes.

7. Dispositif selon la revendication 6, dans lequel le moteur de traitement d'émission reçoit une commande Ajouter paquet indiquant que le paquet est prêt à être transmis, dans lequel la commande Ajouter paquet comprend un champ de décalage qui indique où la seconde adresse de décalage commence par rapport au début du premier tampon.

8. Dispositif selon la revendication 7, dans lequel le champ de décalage est un champ à 6 bits.

9. Dispositif selon la revendication 7, dans lequel la commande Ajouter paquet comprend en outre un champ de mode pour spécifier une encapsulation de paquet à ajouter au début du paquet, dans lequel le moteur de traitement d'émission ajoute l'encapsulation de paquet spécifiée avant la transmission.

10. Dispositif selon la revendication 9, dans lequel le champ de mode spécifie qu'aucune encapsulation ne doit être ajoutée.

11. Dispositif selon la revendication 9, dans lequel l'encapsulation de paquet spécifiée par le champ de mode comprend un en-tête LLC/SNAP.

12. Dispositif selon la revendication 11, dans lequel le champ de mode spécifie en outre l'ajout l'un d'un en-tête LANE et d'une étiquette MPOA.

13. Dispositif selon la revendication 11, comprenant en outre un tableau d'encapsulation LLC/SNAP identifiant une pluralité de valeurs d'encapsulation LLC/SNAP, dans lequel la commande Ajouter paquet comprend en outre un champ LLCE qui pointe vers l'une spécifique des valeurs d'encapsulation LLC/SNAP, dans lequel la valeur spécifique est ajoutée au paquet.

14. Dispositif pour un système de mise en réseau à mode de transfert asynchrone, comprenant :
une mémoire (15, 80) comprenant un ou plusieurs tampons;
un moteur de traitement de réception (60) couplé à la mémoire, le moteur de traitement de réception étant agencé : pour recevoir un paquet pour un premier d'une pluralité de canaux virtuels et stocker le paquet dans un premier des tampons à une première adresse de décalage par rapport au début du premier tampon ; pour ajouter une étiquette par canal virtuel au paquet, ladite étiquette étant associée au premier canal virtuel ; et pour stocker l'étiquette par canal virtuel dans le premier tampon entre le début et la première adresse de décalage ; et
un moteur de traitement d'émission (70) couplé à la mémoire, le moteur de traitement d'émission étant agencé pour débuter, lorsque le premier paquet est prêt à être transmis, l'émission du paquet commençant à une seconde adresse de décalage par rapport au début du premier tampon.

15. Procédé de traitement d'un paquet dans un système de mise en réseau à mode de transfert asynchrone, comprenant les étapes consistant à :
recevoir un paquet sur un premier d'une pluralité de canaux virtuels ;
ajouter une étiquette par canal virtuel au paquet, l'étiquette par canal virtuel étant associée au premier canal virtuel ; **caractérisé par** les étapes suivantes consistant à :
stocker le paquet dans un premier d'une pluralité de tampons à une première adresse de décalage par rapport à un début du premier tampon ;
stocker l'étiquette par canal virtuel dans le premier tampon entre le début et la première étiquette de décalage ; et
lorsque le paquet est prêt à être transmis, commencer la transmission du paquet en commençant à une seconde adresse de décalage par rapport au début du premier tampon.
